# EUROPÄISCHE PATENTSCHRIFT

(11) **EP 2 478 197 B1**
(45) Veröffentlichungstag und Bekanntmachung des Hinweises auf die Patenterteilung: **12.10.2016**
(21) Anmeldenummer: 10737929.9
(22) Anmeldetag: 04.08.2010
(51) Int. Cl.: F01N 11/00, F02D 41/22, F02D 41/24

(54) **ANORDNUNG UND VERFAHREN ZUM BETREIBEN EINER ABGASNACHBEHANDLUNGSVORRICHTUNG**
ARRANGEMENT AND METHOD FOR OPERATING AN EXHAUST GAS AFTERTREATMENT DEVICE
SYSTÈME ET PROCÉDÉ PERMETTANT DE FAIRE FONCTIONNER UN DISPOSITIF DE POST-TRAITEMENT DES GAZ D'ÉCHAPPEMENT

(30) Priorität: 16.09.2009 DE 102009029518
(43) Veröffentlichungstag der Anmeldung: 25.07.2012
(73) Patentinhaber: Robert Bosch GmbH, 70442 Stuttgart (DE)
(72) Erfinder: BAUER, Patrick, 70619 Stuttgart (DE); OENCEL, Mehmet, 74357 Boennigheim (DE); BAUER, Ralph, 73730 Esslingen (DE); SCHELLING, Bernd, 70469 Stuttgart (DE); HOLST, Thomas, 70499 Stuttgart (DE); HOEGELE, Georg, 70825 Muenchingen (DE)
(86) Internationale Anmeldenummer: PCT/EP2010/061335
(87) Internationale Veröffentlichungsnummer: WO 2011/032779

(56) Entgegenhaltungen:
- EP-A1- 1 746 275
- DE-A1- 4 108 694
- DE-A1-102007 033 215
- US-A1- 2007 251 224
- US-A1- 2008 077 303
- US-A1- 2008 282 677

## Beschreibung

Die Erfindung betrifft eine Anordnung zum Betreiben einer Abgasnachbehandlungsvorrichtung, insbesondere eines Kraftfahrzeugs, mit mehreren aktiven Sensoren und mit einem Steuergerät, das wenigstens eine Spannungsversorgungseinheit aufweist, mit der die Sensoren wirkverbunden sind.

### Stand der Technik

Modernen Brennkraftmaschinen ist in aller Regel eine Abgasnachbehandlungsvorrichtung nachgeschaltet, die zur Verringerung der in dem Abgas befindlichen Schadstoffe dient. Derartige Abgasnachbehandlungsvorrichtungen umfassen mehrere Abgasnachbehandlungseinheiten, wie beispielsweise Katalysatoren, Partikelfilter oder dergleichen. Um dauerhaft einen sicheren Betrieb zu gewährleisten, sind der Abgasnachbehandlungsvorrichtung eine Vielzahl von Sensoren zugeordnet, die das Verhalten der Abgasnachbehandlungsvorrichtung beziehungsweise der unterschiedlichen Abgasnachbehandlungseinheiten oder deren Auswirkung auf das Abgas prüfen/erfassen. Die Sensoren sind dazu mit einem Steuergerät wirkverbunden, welchem sie ihre Signale zuführen. In der Regel werden die Signale in dem Steuergerät ausgewertet und im Bedarfsfall beispielsweise eine Warnanzeige für den Fahrer eines Kraftfahrzeugs eingeschaltet. Häufig werden als Sensoren so genannte "aktive Sensoren" verwendet. Diese unterscheiden sich von den so genannten "passiven Sensoren" dadurch, dass sie zur Erfüllung ihrer Funktion elektrische Energie benötigen, die von außen zugeführt wird. Dazu sind die aktiven Sensoren mit einer Spannungsversorgungseinheit des Steuergeräts verbunden. Durch die aktiven Sensoren, oder auch passive Aufnehmer genannt, ist es möglich, statische und quasi statische Messgrößen zu bestimmen. Aus der DE102007033215 A1 ist eine Sensoranordnung zur Detektion der Partikelgrößenverteilung im Abgas bekannt. Dabei ferfügt jeder Sensor seine eigene Spannungsversorgung.

### Offenbarung der Erfindung

Erfindungsgemäß ist vorgesehen, dass die Spannungsversorgungseinheit mindestens zwei voneinander unabhängig schaltbare Versorgungsbänke aufweist, und die Sensoren ihrer Funktion nach gruppiert jeweils einer der Versorgungsbänke zugeordnet sind. Im Unterschied zum Stand der Technik sind die aktiven Sensoren somit mit unterschiedlichen, unabhängig voneinander schaltbaren Versorgungsbänken verbunden, wobei die Sensoren auf die Versorgungsbänke ihrer Funktion nach aufgeteilt sind. Das bedeutet, dass aktive Sensoren (im Folgenden nur noch Sensoren), die der gleichen oder einer ähnlichen Teilaufgabe dienen, jeweils einer gemeinsamen Versorgungsbank zugeordnet sind. Dies hat den Vorteil, dass bei Auftreten einer Fehlfunktion nur die Sensoren einer Gruppe, nämlich der die Fehlfunktion aufweisenden Gruppe, abgeschaltet und die übrigen Sensoren weiterbetrieben werden. So ist es möglich, dass die Abgasnachbehandlungsvorrichtung auch bei Abschalten von einer Abgasnachbehandlungseinheit zugeordneten Sensoren weiterbetrieben werden kann. Je nach Funktion der jeweiligen Sensorgruppe ist das Abschalten der Gruppe mehr oder weniger bedeutend für die gesamte Abgasnachbehandlungsvorrichtung. Jedoch auch bei Abschalten einer besonders wichtigen Gruppe von Sensoren, ist der Weiterbetrieb der Abgasnachbehandlungsvorrichtung eingeschränkt möglich, sodass insbesondere gewährleistet wird, dass ein Fahrer sein Kraftfahrzeug zumindest bis zur nächsten Werkstatt fahren kann, da durch den eingeschränkten Betrieb der Abgasnachbehandlungsvorrichtung dauerhafte Schäden zumindest für einen gewissen Zeitraum vermieden werden.

Bevorzugt weist die Anordnung eine Diagnoseschaltung zur Erfassung einer Fehlfunktion der Sensoren auf. Die Diagnoseschaltung ist bevorzugt in das Steuergerät integriert ausgebildet. Die Diagnoseschaltung überwacht die Funktion der Sensoren und ist mit diesen derart wirkverbunden, dass sie eine erfasste Fehlfunktion einem der Sensoren zuordnen kann.

Vorzugsweise ist die Diagnoseschaltung derart ausgebildet, dass sie eine oder mehrere der Versorgungsbänke abschaltet, wenn bei einem der entsprechenden Versorgungsbank zugeordneten Sensoren ein Fehler erfasst wird. Wenn also die Diagnoseschaltung eine Fehlfunktion diagnostiziert und einem bestimmten Sensor zuordnet, schaltet sie die den bestimmten Sensor aufweisende Versorgungsbank ab, um Fehlfunktionen in der Abgasnachbehandlungsvorrichtung und eine damit einhergehende Beschädigung zu vermeiden. Da die Sensoren ihrer Funktion nach gruppiert an der Versorgungsbank angeschlossen sind, stellt das Abschalten der übrigen an die gleiche Versorgungsbank angeschlossenen Sensoren keine besonders weitergehende Einschränkung dar.

Vorteilhafterweise betrifft eine erste Gruppe mit mindestens einem Sensor eine Partikelfilterregeneration. Bei diesen Sensoren handelt es sich bevorzugt um Temperatursensoren, oder beispielsweise auch Drucksensoren, die den Druck des Abgases vor und nach einem Partikelfilter zur Bestimmung dessen Füllzustandes erfassen.

Erfindungsgemäß ist vorgesehen, dass eine zweite Gruppe mit mindestens einem Sensor die Dosierung von Abgasnachbehandlungsmittel betrifft. Die zweiten ihrer Funktion nach gruppierten Sensoren dienen also der Dosierung von Abgasnachbehandlungsmittel. Bei derartigen Sensoren handelt es sich beispielsweise um Drucksensoren, die den Druck des Abgasnachbehandlungsmittels erfassen, oder um Sensoren, die beispielsweise die Funktionsfähigkeit eines Einspritzventils oder dessen Aktuators erfassen. Ebenso kann es sich um Temperatursensoren zur Erfassung der Temperatur des Abgasnachbehandlungsmittels handeln.

Erfindungsgemäß ist auch vorgesehen, dass eine dritte Gruppe mit mindestens einem Sensor einem Fördermodul für das Abgasnachbehandlungsmittel zugeordnet ist. Das Fördermodul, das bevorzugt als Förderpumpe ausgebildet ist, dient zur Förderung und zum Druckaufbau für das bevorzugt flüssige Abgasnachbehandlungsmittel. In dieser Gruppe vorgesehene Sensoren erfassen beispielsweise die Drehzahl des Fördermoduls oder die Temperatur und/oder den Druck des Abgasnachbehandlungsmittels. Es wird beispielsweise mittels des Temperatursensors geprüft, ob die Temperatur des Abgasnachbehandlungsmittels oberhalb des Gefrierpunktes des Abgasnachbehandlungsmittels liegt, und ob somit ein Fördern des Abgasnachbehandlungsmittels möglich ist. Sollte hierbei beispielsweise der Temperatursensor ausfallen, wird sicherheitshalber die dritte Gruppe beziehungsweise die entsprechende Versorgungsbank durch die Diagnoseschaltung abgeschaltet, sodass das Fördermodul nicht betrieben, und aufgrund von gefrorenem Abgasnachbehandlungsmittel beschädigt wird. Die erste und die zweite Gruppe, wie sie oben beschrieben wurden, können dennoch weiterbetrieben werden, sodass beispielsweise eine Partikelfilterregeneration trotz Ausfall der dritten Gruppe durchgeführt werden kann. Dadurch wird quasi ein Notbetrieb der Abgasnachbehandlungsvorrichtung gewährleistet, der es dem Fahrer eines Kraftfahrzeugs erlaubt, selbstständig zur nächsten Werkstatt zu fahren, ohne dass dabei Komponenten der Abgasnachbehandlungsvorrichtung beschädigt werden.

Das erfindungsgemäße Verfahren zum Betreiben einer Abgasnachbehandlungsvorrichtung, einer Anordnung wie sie oben beschrieben wurde, zeichnet sich dadurch aus, dass die Sensoren ihrer Funktion nach gruppiert mindestens zwei unabhängig voneinander schaltbaren Versorgungsbänken der Spannungsversorgungseinheit zugeordnet werden. Es werden also funktionsbedingte beziehungsweise funktionelle Gruppen von Sensoren gebildet, die mit unterschiedlichen Versorgungsbänken der Spannungsversorgungseinheit verbunden werden, sodass die Gruppen unabhängig voneinander abschaltbar beziehungsweise deaktivierbar sind.

Erfindungsgemäß wird eine Versorgungsbank dann abgeschaltet, wenn ein Fehler bei einem der entsprechenden Versorgungsbank zugeordneten Sensor ermittelt beziehungsweise erfasst wird. Während die die Fehlfunktion aufweisende Gruppe beziehungsweise Versorgungsbank abgeschaltet wird, können die übrigen Gruppen weiterbetrieben und ein eingeschränkter Betrieb der Abgasnachbehandlungsvorrichtung gewährleistet werden. Hierdurch ergeben sich die oben bereits beschriebenen Vorteile.

Im Folgenden soll die Erfindung anhand eines Ausführungsbeispiels näher erläutert werden. Dazu zeigen:
- Figur 1: eine schematische Darstellung einer vorteilhaften Anordnung zum Betreiben einer Abgasnachbehandlungsvorrichtung, und
- Figur 2: eine Verfügbarkeitsmatrix zur Darstellung der Funktionsweise der vorteilhaften Anordnung.

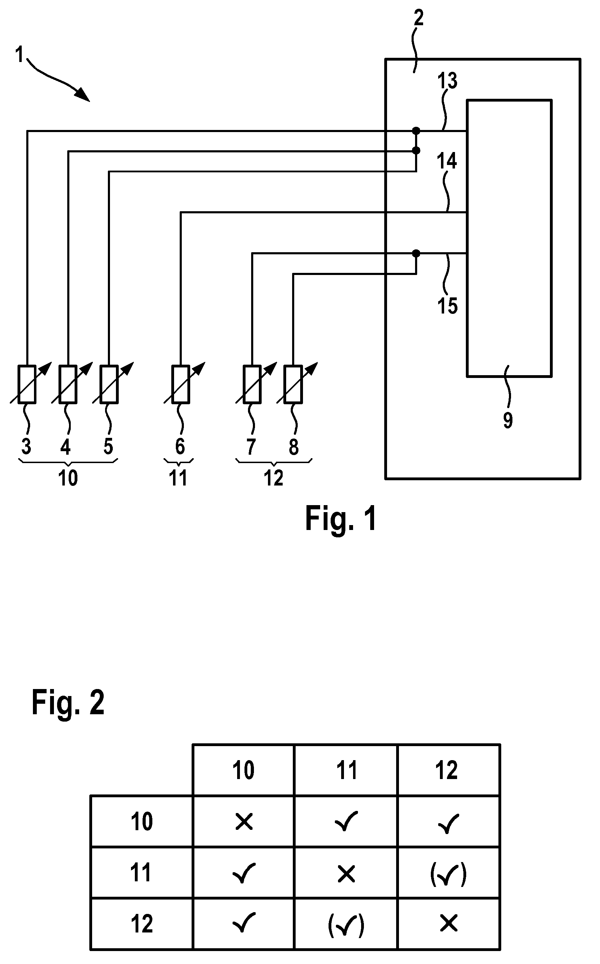

Die Figur 1 zeigt in einer schematischen Darstellung eine vorteilhafte Anordnung 1 zum Betreiben einer hier nicht näher dargestellten Abgasnachbehandlungsvorrichtung einer Brennkraftmaschine, insbesondere eines Kraftfahrzeugs. Die Anordnung 1 umfasst ein Steuergerät 2 und mehrere aktive Sensoren 3 bis 8, die an einer Spannungsversorgungseinheit 9 des Steuergeräts 2 angeschlossen sind. Die Sensoren 3 bis 8 sind unterschiedlichen Bereichen und/oder Elementen der Abgasnachbehandlungsvorrichtung zugeordnet und dienen unter anderem zur Funktionsüberwachung von unterschiedlichen Abgasnachbehandlungseinrichtungen, wie beispielsweise Partikelfilter oder Einspritzventil für Abgasnachbehandlungsmittel.

Die Sensoren 3 bis 8 sind in drei Gruppen 10, 11 und 12 aufgeteilt, wobei sie ihrer Funktion nach gruppiert sind.

Die erste Gruppe 10 umfasst die Sensoren 3 bis 5, die im Zusammenhang mit der Regeneration eines Partikelfilters der Abgasnachbehandlungsvorrichtung stehen. So dienen beispielsweise die Sensoren 3 und 4 der Erfassung eines Druckgefälles über den Partikelfilter, auf Basis dessen der Füllstand des Partikelfilters ermittelt werden kann. Der Sensor 5 dient beispielsweise zur Erfassung der Temperatur des Partikelfilters, die für die Regeneration des Partikelfilters eine bestimmte Schwelle überschreiben muss.

Die zweite Gruppe 11 umfasst den Sensor 6, der einem Einspritzventil für Abgasnachbehandlungsmittel zugeordnet ist. Das Einspritzventil ist zweckmäßigerweise an einem Abgasrohr derart angeordnet, dass dem Einspritzventil zugeführtes Abgasnachbehandlungsmittel dem durch das Abgasrohr strömenden Abgas zugeführt werden kann. Bevorzugt wird das Abgasnachbehandlungsmittel durch den Einspritzvorgang zerstäubt, sodass es sich besonders vorteilhaft mit dem Abgas mischt. Der Sensor 6 dient hierbei beispielsweise zur Überwachung der Funktionsfähigkeit des Einspritzventils oder eines Aktuators des Einspritzventils.

Die Gruppe 12 umfasst die verbleibenden Sensoren 7 und 8, die einem Fördersystem für das Abgasnachbehandlungsmittel zugeordnet sind. So ist insbesondere der Sensor 7 einem Förderaggregat, bevorzugt einer Förderpumpe, zugeordnet, und erfasst beispielsweise die Funktionsfähigkeit der Förderpumpe oder den durch die Förderpumpe erbrachten Druck des geförderten Abgasnachbehandlungsmittels. Der Sensor 8 ist vorzugsweise als Temperatursensor ausgebildet und erfasst die Temperatur des zu fördernden Abgasnachbehandlungsmittels. Mittels des Sensors 8 kann somit sichergestellt werden, dass die Temperatur des Abgasnachbehandlungsmittels über dessen Gefrierpunkt liegt. Sollte dies nicht der Fall sein, wird bevorzugt eine Heizeinrichtung der Abgasnachbehandlungsvorrichtung beziehungsweise des Fördersystems für das Abgasnachbehandlungsmittel aktiviert, um das Abgasnachbehandlungsmittel aufzutauen. Bis das Abgasnachbehandlungsmittel jedoch aufgetaut ist, würde ein Aktivieren der Förderpumpe zu deren Beschädigung führen.

Die so gruppierten Sensoren 3 bis 8 sind unterschiedlichen, voneinander unabhängig schaltbaren Versorgungsbänken 13, 14 und 15 zugeordnet. Die Gruppen 10, 11 und 12 können dadurch unabhängig voneinander deaktiviert werden. Bevorzugt wird der treibende Strom mittels der Spannungsversorgungseinheit 9 gleichmäßig auf alle Geberversorgungsbänke aufgeteilt. Bevorzugt wird hierzu an allen (Geber-)Versorgungsbänken eine Spannung von 3,3 V oder 5 V angelegt.

Die Figur 2 zeigt in einer Matrix den wesentlichen Vorteil der Anordnung 1 beziehungsweise des obenstehend beschriebenen Verfahrens. In der Kopfzeile sind die Gruppen 10, 11 und 12 eingetragen und in den darunterstehenden Zeilen die Auswirkung eines Ausfalls der Gruppen 10, 11 und 12 auf das Gesamtsystem beziehungsweise die übrigen Gruppen 10, 11 beziehungsweise 12.

Erfasst eine, hier nicht näher dargestellte, in das Steuergerät 2 integrierte Diagnoseschaltung eine Fehlfunktion in einer der Gruppen 10, 11 oder 12, so schaltet sie die entsprechende, die Fehlfunktion aufweisende Gruppe 10, 11 oder 12 ab, um sie vor Beschädigungen zu schützen.

Erfasst die Diagnoseschaltung eine Fehlfunktion des Sensors 3 der Gruppe 10, so schaltet sie die gesamte Gruppe 10 ab. Dies wirkt sich jedoch aufgrund der vorteilhaften Gruppierung der Sensoren 3 bis 8 nicht auf die Gruppen 11 und 12 auf. Sind die Sensoren 3, 4, 5 für die Partikelfilterregeneration ausgefallen, ist es dennoch möglich die Sensoren betreffend das Einspritzventil oder das Fördersystem für das Abgasnachbehandlungsmittel zu nutzen, wie durch ein Häkchen in dem entsprechenden Feld dargestellt.

Erfasst die Diagnoseschaltung jedoch eine Fehlfunktion eines der Sensoren 7 oder 8, schaltet sie die Gruppe 12 ab. Dies hat zur Folge, dass ein Einspritzen von Abgasnachbehandlungsmitteln nur noch bedingt möglich ist. Dies hängt dann von dem noch verbleibenden beziehungsweise verbliebenen Druck in dem Abgasnachbehandlungsmittel-Fördersystem ab, der jedoch aufgrund des Ausfalls der Gruppe 12 nicht mehr erfasst werden kann..

Entsprechendes gilt bei einem Ausfall der Gruppe 11, bei der die Gruppe 10 weiterhin voll funktionsfähig und damit eine Partikelfilterregeneration durchführbar bleibt, während die Gruppe 12 nur betriebsbedingt, hier durch ein in Klammern gesetztes Häkchen dargestellt, nutzbar ist.

Insgesamt erlaubt somit die vorteilhafte Anordnung 1 beziehungsweise das entsprechende Verfahren einen Weiterbetrieb der Abgasnachbehandlungsvorrichtung bei Ausfall einer der Gruppen 10, 11 oder 12 zumindest im eingeschränkten Umfang, sodass eine Mindestschadstoffreduzierung weiterhin gewährleistet und ein dauerhafter Schaden verhindert wird.

## Patentansprüche

1. Anordnung (1) zum Betreiben einer Abgasnachbehandlungsvorrichtung eines Kraftfahrzeugs, mit mehreren aktiven Sensoren (3-8) und mit einem Steuergerät (2), das wenigstens eine Spannungsversorgungseinheit (9) aufweist, mit der die Sensoren (3-8) wirkverbunden sind, **dadurch gekennzeichnet, dass** die Spannungsversorgungseinheit (9) mindestens zwei voneinander unabhängig schaltbare Versorgungsbänke (13-15) aufweist und die Sensoren (3-8) ihrer Funktion nach gruppiert jeweils einer der Versorgungsbänke (13-15) zugeordnet sind, dass eine Gruppe (11) mit mindestens einem Sensor (6) die Dosierung von Abgasnachbehandlungsmittel betrifft, wobei der Sensor (6) einem Einspritzventil für Abgasnachbehandlungsmittel zugeordnet ist, dass eine weitere Gruppe (12) mit mindestens einem Sensor (7, 8) einem Fördermodul für das Abgasnachbehandlungsmittel zugeordnet ist, wobei ein Sensor (7) einer Förderpumpe zugeordnet ist und den durch die Förderpumpe erbrachten Druck des geförderten Abgasnachbehandlungsmittels erfasst und wobei ein Sensor (8) als Temperatursensor ausgebildet ist und die Temperatur des zu fördernden Abgasnachbehandlungsmittels erfasst.

2. Anordnung nach Anspruch 1, **gekennzeichnet durch** eine Diagnoseschaltung zur Erfassung einer Fehlfunktion.

3. Anordnung nach einem der vorhergehenden Ansprüche, **dadurch gekennzeichnet, dass** die Diagnoseschaltung eine oder mehrere der Versorgungsbänke (13-15) abschaltet, wenn bei einem der entsprechenden Versorgungsbank (13-15) zugeordneten Sensoren (3-8) ein Fehler erfasst wird.

4. Anordnung nach Anspruch 1, **dadurch gekennzeichnet, dass** eine weiter Gruppe (10) mit mindestens einem Sensor (3 - 5) eine Partikelfilterregeneration betrifft.

5. Verfahren zum Betreiben einer Abgasnachbehandlungsvorrichtung eines Kraftfahrzeugs zum Betreiben der Anordnung nach einem der vorhergehenden Ansprüche, **dadurch gekennzeichnet, dass** eine Versorgungsbank abgeschaltet wird, wenn eine Fehlfunktion bei mindestens einem der entsprechenden Versorgungsbank zugeordneten Sensor ermittelt wird.

## Claims

1. Arrangement (1) for operating an exhaust gas aftertreatment device of a motor vehicle, having a plurality of active sensors (3-8) and a control module (2), which comprises at least one voltage supply unit (9), to which the sensors (3-8) are operatively connected, **characterized in that** the voltage supply unit (9) comprises at least two supply banks (13-15) that can be switched independently of one another, and the sensors (3-8), grouped according to their function, are each assigned to one of the supply banks (13-15), that a group (11) of at least one sensor (6) relates to the metering of exhaust gas aftertreatment agent, wherein the sensor (6) is assigned to an injection valve for exhaust gas aftertreatment agent, that a further group (12) of at least one sensor (7, 8) is assigned to a feed module for the exhaust gas aftertreatment agent, wherein a sensor (7) is assigned to a feed pump and registers the pressure of the delivered exhaust gas aftertreatment agent produced by the feed pump, and wherein a sensor (8) is embodied as a temperature sensor and registers the temperature of the exhaust gas aftertreatment agent to be fed.

2. Arrangement according to Claim 1, **characterized by** a diagnostic circuit for detecting a malfunction.

3. Arrangement according to one of the preceding claims, **characterized in that** the diagnostic circuit deactivates one or more of the supply banks (13-15) if a fault is detected in one of the sensors (3-8) assigned to the corresponding supply bank (13-15).

4. Arrangement according to Claim 1, **characterized in that** a further group (10) of at least one sensor (3-5) relates to particle filter regeneration.

5. Method for operating an exhaust gas aftertreatment device of a motor vehicle for operating the arrangement according to one of the preceding claims, **characterized in that** a supply bank is deactivated if a malfunction is detected in at least one sensor assigned to the corresponding supply bank.

## Revendications

1. Arrangement (1) pour faire fonctionner un dispositif de post-traitement des gaz d'échappement d'un véhicule automobile, comprenant plusieurs capteurs actifs (3-8) et comprenant un contrôleur (2), lequel possède au moins une unité d'alimentation électrique (9) avec laquelle les capteurs (3-8) sont en liaison fonctionnelle, **caractérisé en ce que** l'unité d'alimentation électrique (9) possède au moins deux blocs d'alimentation (13-15) commutables indépendamment l'un de l'autre et les capteurs (3-8), groupés d'après leur fonction, sont respectivement associés à l'un des blocs d'alimentation (13-15), **en ce qu'**un groupe (11) comprenant au moins un capteur (6) concerne le dosage d'un agent de post-traitement des gaz d'échappement, le capteur (6) étant associé à une vanne d'injection de l'agent de post-traitement des gaz d'échappement, **en ce qu'**un groupe supplémentaire (12) comprenant au moins un capteur (7, 8) est associé à un module de débit de l'agent de post-traitement des gaz d'échappement, un capteur (7) étant associé à une pompe de débit et détectant la pression de l'agent de post-traitement des gaz d'échappement débité produite par la pompe de débit et un capteur (8) étant réalisé sous la forme d'une sonde de température et détectant la température de l'agent de post-traitement des gaz d'échappement à débiter.

2. Arrangement selon la revendication 1, **caractérisé par** un circuit de diagnostic destiné à détecter un défaut de fonctionnement.

3. Arrangement selon l'une des revendications précédentes, **caractérisé en ce que** le circuit de diagnostic met hors circuit un ou plusieurs des blocs d'alimentation (13-15) lorsqu'un défaut est détecté au niveau de l'un des capteurs (3-8) associés au bloc d'alimentation (13-15) correspondant.

4. Arrangement selon la revendication 1, **caractérisé en ce qu'**un groupe supplémentaire (10) comprenant au moins un capteur (3-5) concerne une régénération d'un filtre à particules.

5. Procédé pour faire fonctionner un dispositif de post-traitement des gaz d'échappement d'un véhicule automobile pour faire fonctionner un arrangement selon l'une des revendications précédentes, **caractérisé en ce qu'**un bloc d'alimentation est mis hors circuit lorsqu'un défaut de fonctionnement est détecté au niveau d'au moins l'un des capteurs associés au bloc d'alimentation correspondant.
